# EUROPÄISCHE PATENTANMELDUNG

(11) **EP 3 670 391 A1**
(43) Veröffentlichungstag der Anmeldung: **24.06.2020**
(21) Anmeldenummer: 18214312.3
(22) Anmeldetag: 20.12.2018
(51) Int. Cl.: B65G 13/10, B65G 13/02

(54) **FÖRDEREINHEIT ALS TEIL EINES FÖRDERSYSTEMS UND NACHRÜSTSATZ FÜR EIN FÖRDERSYSTEM**

(71) Anmelder: Siemens Aktiengesellschaft, 80333 München (DE)
(72) Erfinder: LAMPRECHT, Thorsten, 78465 Konstanz (DE)
(74) Vertreter: Maier, Daniel Oliver

(57) **Zusammenfassung**

Um besonders die unförmigen eher kleineren Massensendungen zuverlässig in einer Fördereinheit eines übergeordneten Fördersystems transportieren und ausschleusen zu können wird vorgeschlagen:
Bestehende Fördereinheiten mit einer einzigen Rolle (41) pro Rollenhalter (43) werden mit einem Nachrüstsatz mit zwei Aufsatzrollen (42) versehen. Dadurch sind die bewegten Auflageflächen deutlich grösser und die Gefahr eines Hängenbleibens einer Sendung deutlich reduziert. Dadurch erfolgt die Förderung mittels einer «Doppelrollentechnologie».

Neue Fördereinheiten können in gleicher Weise mit dieser «Doppelrollentechnologie» erstellt werden.

## Beschreibung

Die vorliegende Erfindung bezieht sich auf eine Fördereinheit als Teil eines rollenbasierten Fördersystems gemäß dem Patentanspruch 1 und einen Nachrüstsatz für ein bestehendes rollenbasiertes Fördersystem gemäß dem Patentanspruch 10.

Der Erfindung liegt das Gebiet Sortier- und Fördersysteme zugrunde. Sortiersysteme identifizieren in ungeordneter Reihenfolge ankommendes, heterogen geformtes und vereinzeltes Stückgut, beispielsweise Pakete (in Paket-Sortierzentren), Gepäckstücke (in Flughafenterminals) oder Kommissionsware (in Versandhäusern), aufgrund vorgegebener Unterscheidungskriterien und verteilen sie auf festgelegte Ziele. Solche Sortiersysteme bestehen aus Sortieranlagen, die mit entsprechenden organisatorischen Abläufen und angepassten Betriebsstrategien, welche in zugehörigen Steuerungen bei den Sortieranlagen bzw. Sortiersystemen implementiert sind, die Systemfunktionalität der Sortiersysteme gewährleisten.

Ein solcher Sorter selbst besteht aus einer Einschleusung, einem Verteilförderer und End-/Zielstellen für das zu verteilende Stückgut.

Bei technikorientierter Klassifizierung von Verteilförderern nach den Kriterien Belegungsart, Wirkprinzip einer Ausschleusung des Stückgutes und fördertechnisches Prinzip werden insbesondere Verteilförderer mit einer
- Quergurt- bzw. Querbandtechnologie oder einer
- Kippschalentechnologie unterschieden.

Diese werden kurz als Quergurtförderer / Querbandsorter oder Kippschalensorter bezeichnet. Diese können als horizontale Kreis-Sorter oder als vertikale Kreis-Sorter oder als Linear-Sorter ausgeführt sein.

Für diese Sortier- und Fördersysteme ist ein modularer Aufbau sehr erwünscht, da dadurch Standardkomponenten eingesetzt werden können und eine Anpassung an anlagespezifische Besonderheiten, wie Dimension oder Anzahl der Zielstellen leicht zu bewerkstelligen ist.

Nebst der vorstehend erwähnten Querbandtechnologie und der Kippschalensorter sind zunehmend auch Fördersysteme mit einstellbaren Transportrollen im Einsatz.

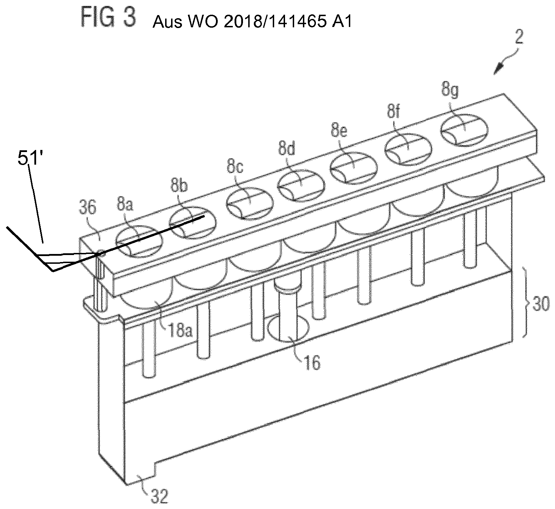

FIG 3 zeigt eine in der Schrift [3] offenbarte Fördereinheit, mit der durch eine nebeneinander angeordnete Beistellung der erwähnte modulare Aufbau leicht möglich ist. Die um einer horizontalen Drehachse angetriebenen Transportrollen sind dabei individuell um eine vertikale Achse schwenkbar, um den zu transportierenden Stückgütern eine entsprechende Transportrichtung zu verleihen. Der erwähnte modulare Aufbau hat zwei Dimensionen:
i) Einerseits ist es die nebeneinander erfolgte Beistellung von rollenbasierten Fördereinheiten zu einem sogenannten Zentralmodul.
ii) Andererseits können diesem Zentralmodul bandbasierte Fördermodule beigestellt werden für jene Abschnitte eines Fördersystems, wo lediglich ein Transport und keine Ausschleusung zu Sortierzwecken erforderlich ist.

Die Postdienstleister sind in erheblichem Ausmass mit einer Zunahme von Stückgütern in Form von Kleinstsendungen mit geringem Gewicht und geringer Auflagefläche konfrontiert. Oft sind diese Kleinstsendungen insoweit unförmig, als diese auf einem Fördersystem mit Transportrollen hängen bleiben. Als Beispiele solcher unförmiger Sendungen sind Plastiksäcke mit einem Querschnitt in der Grösse von etwa A5 bis max. A4 zu nennen, deren Inhalt aus einem Bauteil oder einer kleinen Schachtel von wenigen Zentimetern besteht. Solche Inhalte weisen typischerweise eine Masse von etwa 0,1kg bis etwa 0,6kg auf. Solche Sendungen mit einem Inhalt wie vorstehend beschrieben können aufgrund eines extrem liegenden Schwerpunkts (Schwerpunkt bezogen auf den Plastiksack) ein Hängenbleiben einer Sendung verursachen. Dies stört den Förder- und Sortierprozess allein schon durch eine sogenannte Lückenverschiebung.

In der Schrift [1] ist eine Fördereinheit mit individuell um eine vertikale Achse drehbaren Doppelrollen offenbart, bei der das vorgenannte Problem bezüglich des Hängenbleibens durch eine Vergrösserung der aktiven Fläche behoben ist. Aktive Fläche bedeutet, dass der Inhalt der vorgenannten unförmigen Sendungen mit zB einem Schwerpunkt an einem Rand der Sendung nicht mehr zwischen zwei Doppelrollen hängen bleiben kann.

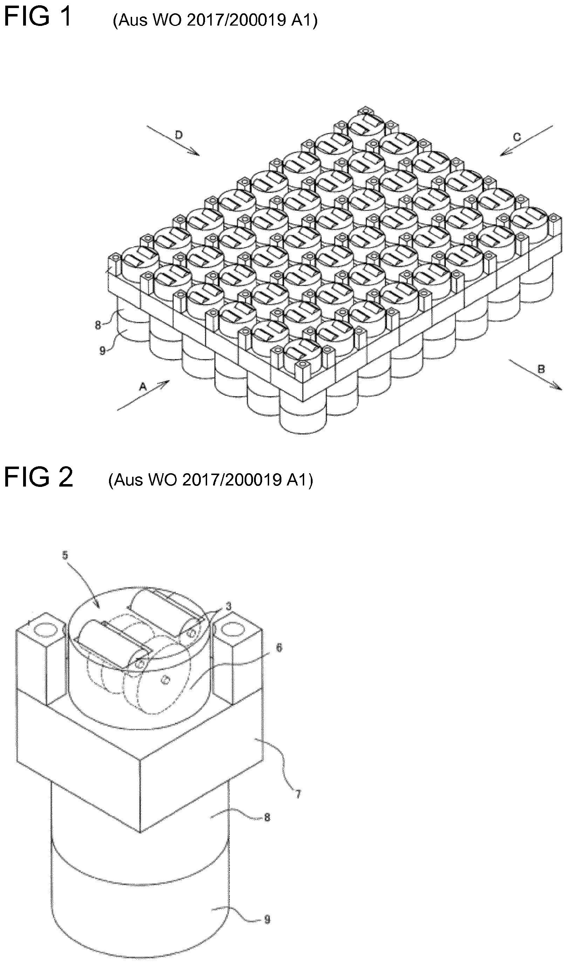

Bei der in der Schrift [1] offenbarten Lösung mit Doppelrollen ist nachteilig, dass ein modularer Aufbau nicht möglich ist und die konstruktive Ausführung aufwendig ausgestaltet ist. Dazu wird auf die FIG 1 und FIG 2 hingewiesen, die der Schrift [1] entnommen wurden.

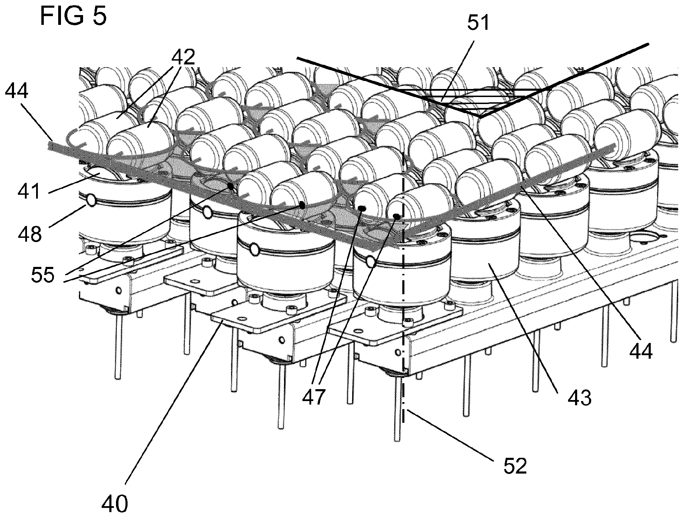

Es ist ein Bedarf ausgewiesen, bestehende Anlagen von der «Einfachrollentechnologie» wie zB in den Schriften [2] und [3] offenbart, auf eine «Doppelrollentechnologie» - wie in der Schrift [1] angegeben - aufzurüsten, um die vorstehend beschriebenen Nachteile mit dem Hängenbleiben von Sendungen zu eliminieren. Der konstruktive Aufbau gemäß der Schrift [1] verunmöglicht eine solche Aufrüstung bestehender Anlagen auf die «Doppelrollentechnologie». Der konstruktive Aufbau dieser «Doppelrollentechnologie» ist im Dokument [1] in Figur 5 in einer Keilrad-Ausführung gezeigt.

Der vorliegenden Erfindung liegt daher die Aufgabe zugrunde, eine Fördereinheit für ein übergeordnetes Fördersystem zum Transport von Stückgütern und einen Nachrüstsatz zu bestehenden rollenbasierten Fördersystem anzugeben, um auf einfache und sichere Weise einerseits modulare Fördersysteme mit «Doppelrollentechnologie» bereitzustellen und andererseits bestehende Fördersysteme auf «Doppelrollentechnologie» aufzurüsten.

Diese Aufgabe wird durch die in den unabhängigen Patentansprüchen angegebenen Merkmale gelöst. Vorteilhafte Ausgestaltungen der Erfindung sind in weiteren Ansprüchen angegeben.

Für die Fördereinheit für ein übergeordnetes Fördersystem zum Transport von Stückgütern ist erfindungsgemäß vorgesehen, dass
- die Stückgüter in einer Zuführrichtung zu einer ursprünglichen Transportebene der Fördereinheit zugeführt werden;
- die Fördereinheit Rollenhalter enthält, die je eine Rolle aufweisen, deren Drehachse parallel zu einer ursprünglichen Transportebene ist und jeder Rollenhalter um eine zur ursprünglichen Transportebene orthogonale Schwenkachse von einer Steuerung drehbar ist,
- die Rollen mit einem Antriebsmittel gekoppelt sind, wobei das Antriebsmittel von der Steuerung betätigbar ist;
und zu jedem Rollenhalter zwei in einem Rahmen gehaltene Aufsatzrollen für den Transport der Stückgüter auf einer finalen Transportebene die parallel zur ursprünglichen Transportebene ist, vorgesehen sind, wobei die Drehachsen der Aufsatzrollen parallel zur finalen Transportebene angeordnet sind und die Aufsatzrollen mit der Rolle rotatorisch gekoppelt sind.

Für den Nachrüstsatz zu einem bestehenden rollenbasierten Fördersystem ist erfindungsgemäß vorgesehen, dass
- die Stückgüter in einer Zuführrichtung zu einer ursprünglichen Transportebene der Fördereinheit zuführbar sind;
- die Fördereinheit Rollenhalter enthält, die je eine Rolle aufweisen, deren Drehachse parallel zur ursprünglichen Transportebene ist und jeder Rollenhalter ansteuerbar um eine zur ursprünglichen Transportebene orthogonale Schwenkachse drehbar ist,
- die Rollen mit einem Antriebsmittel gekoppelt sind, wobei das Antriebsmittel von einer Steuerung betätigbar ist; und
dass der Nachrüstsatz gebildet wird aus einem Rahmen, in dem zwei Aufsatzrollen gehalten sind die für den Transport der Stückgüter in einer zur ursprünglichen Transportebene parallelen finalen Transportebene vorgesehen sind, derart, dass die Drehachsen der Aufsatzrollen parallel zu den Transportebenen sind und der Nachrüstsatz mit der Fördereinheit so verbindbar ist, dass je zwei Aufsatzrollen mit der Rolle des Rollenhalters rotatorisch gekoppelt sind.

So können sich die folgenden Vorteile zusätzlich ergeben:
i) Durch die rein mechanische Erhöhung der Transportfläche mit zwei Aufsatzrollen pro ursprünglicher einfacher Rolle bedarf die zugrundeliegende Steuerung keinerlei Anpassungen. Dies erleichtert die Wartung der Steuerung ganz erheblich, da solche Steuerungen stets als programmierbare Steuerungen ausgeführt sind.
ii) Mit der rein mechanischen Lösung können bestehende Fördereinheiten bei einem Postdienstleister nicht nur weiterverwendet werden, sondern auch der Hersteller kann die bestehende Konzeption der Fördereinheiten weiter produzieren. Das ist wichtig für jene Postdienstleister, die (noch) nicht mit den erwähnten unförmigen Sendungen konfrontiert sind. Damit wird die Variantenvielfalt bei einem Hersteller nicht unnötig erhöht.
iii) Diese konstruktiv einfache Lösung erlaubt eine Vielzahl von Realisierungsformen wie zB
   - Gliederung einer Mehrzahl von Rahmen mit den je zwei Aufsatzrollen in Rollenzeilen,
   - Aufnahme der Rahmen einer Mehrzahl von Rahmen mit den je zwei Aufsatzrollen in ein Aufsatzgestell.
iv) Die Fördereinheiten sind einer allgemeinen Verschmutzung sowie aufgrund von beschädigten Sendung einer besonderen Verschmutzung ausgesetzt. Die die Sendungen befördernden Rollen sind meist mit einer Gummioberfläche versehen, die durch einen Vulkanisierungsprozess auf die Oberfläche der Rollen angebracht sind. Diese Oberflächen sind jedoch besonders einer Verschmutzung ausgesetzt. Die vorliegende Erfindung mit den aufsetzbaren Doppelrollen erlaubt eine einfachere Wartung bzw. Wiederinstandstellung, da lediglich die die Doppelrollen enthaltenden Rahmen ausgetauscht werden müssen anstelle einer ganzen Fördereinheit.

Wenn die bestehenden Fördereinheiten bzw. Rollenzeilen höhenverstellbar sind, kann der Nachrüstsatz auch nur für einen Teil des übergeordneten Fördersystems eingesetzt werden. In einem Fördersystem ist aufgrund der Erfassung der Sendungen (Zur Begrifflichkeit: Sendung = Stückgut) die Art der Sendung ebenfalls bekannt. So können die hier kritisch zu nennenden Sendungen im Fördersystem zuerst ausgeschleust bzw. sortiert werden. Dies beruht auf einem attributbasierten Sortierprozess, bei dem im Voraus die Art der Sendungen erfasst worden ist. Dazu werden die erfindungsgemäß vorgesehenen Aufsatzrollen eingesetzt. Weiter stromabwärts sind dann nur noch «gewöhnliche» Sendungen zu transportieren, so dass die bisherige «Einfachrollentechnologie» genügt.

Weitere vorteilhafte Ausführungsformen sind in den abhängigen Ansprüchen angegeben.

Die Erfindung wird nachfolgend anhand der Zeichnung beispielsweise näher erläutert. Dabei zeigen:
Figur 1 Doppelrollenmatrix aus dem Stand der Technik gemäß der FIG 1 im Dokument WO 2017/200019 A1 [1];
Figur 2 Detailansicht einer Doppelrolle aus dem Stand der Technik gemäß der FIG 2 im Dokument WO 2017/200019 A [1]1;
Figur 3 Ansicht einer Fördereinheit mit einer Verstellvorrichtung gemäß der FIG 3 im Dokument WO 2018/141465 A1 [3];
Figur 4 Aufsicht auf ein Zentralmodul bzw auf eine Fördereinheit mit versetzt angeordneten Rollenzeilen als Teil eines Fördersystems in einer Ausführungsform gemäß der vorliegenden Erfindung;
Figur 5 Ausführungsform von in einem Aufsatzrahmen gefassten Nachrüstsätzen in einer perspektivischen Ansicht;
Figur 6 Ansicht einer weiteren Ausführungsform eines Nachrüstsatz in einer Schnittdarstellung.

Um den Kontext zu Ausführungsbeispielen der vorliegenden Erfindung besser zu verstehen, werden zunächst die in den Dokumenten [1] und [3] dargestellten Lösungen erläutert.

Die FIG 1 mit der Übersichtsdarstellung und die FIG 2 mit der Detaildarstellung sind dem Dokument [1] entnommen. FIG 1 zeigt eine Fördereinheit 2 mit einem matrixartigen Aufbau einer Mehrzahl von Transportzellen 1 gezeigt. Jede Transportzelle 1 weist zwei Transportrollen 3 auf, über die die zu transportierenden Stückgüter geführt werden. Die Einschleusung der Stückgüter erfolgt aus den Richtungen A, D und C (siehe FIG 1) und durch koordiniertes Drehen einer Mehrzahl von Transportzellen 1 werden die Stückgüter in die Richtungen B ausgeschleust. Gemäß Beschreibung im Dokument [1] sind B, C und D Ausschleus-Richtungen, dies ist jedoch nicht weiter erheblich. FIG 2 zeigt den konstruktiven Aufbau einer einzelnen Transportzelle mit einem Gehäuse und zwei separierten Antriebsmotoren 8 und 9 für das Drehen der Transportzelle 1 und den Antrieb der Transportrollen 3.

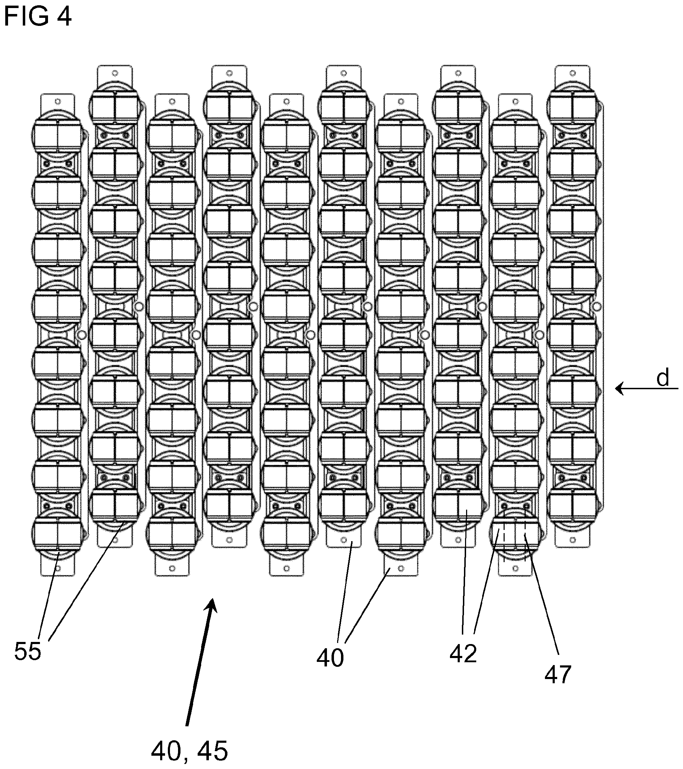

Die aus dem Dokument [3] entnommene FIG 3 zeigt eine Fördereinheit 2 in «Einfachrollentechnologie». Mehrere solche als Rollenzeile ausgebildete Fördereinheiten 2 werden nebeneinander mit einer Verbindungsvorrichtung 32 nebeneinander angeordnet. Jede Rolle 8a, 8b, ... kann einzeln durch ein Antriebsmittel 18a in Rotation versetzt werden. Diese Rollen 8a, 8b, ..., definieren eine ursprüngliche Transportebene 51'. Der Begriff «ursprünglich» wird deshalb verwendet, weil mit der vorliegenden Erfindung die zu erreichende finale Transportebene 51 eine andere ist, jedoch immer noch parallel zur ursprünglichen Transportebene verschoben um die Aufsatzrollen (weiteres dazu siehe unten zu den FIG 4 bis 6). Um einen möglichst breiten Einsatz solcher Fördereinheiten 2 gemäß dem Dokument [3] zu gewährleisten, ist der obere Teil mit den Rollen 8a, 8b ..., über eine Höhenverstellvorrichtung 16 in der Höhe verstellbar. Dies ist insbesondere relevant für den Einbau einer Mehrzahl solcher als Rollenzeile ausgebildeter Fördereinheiten in ein bestehendes Fördersystem. Die Funktionsweise der Fördereinheit 2 gemäß der FIG 3 ist identisch zu jener gemäß den FIG 1 und FIG 2.

FIG 4 zeigt eine Aufsicht auf ein Zentralmodul 45 mit versetzt angeordneten aber einheitlich ausgestalteten Rollenzeilen 40 für ein Fördersystem in einer Ausführungsform gemäß der vorliegenden Erfindung in «Doppelrollentechnologie». Die zu transportierenden Stückgüter werden aus der Zuführrichtung d dem Zentralmodul 45 zugeführt und von den angetriebenen Doppelrollen 42 übernommen. Jede Doppelrolle 42 rotiert um eine Drehachse 47. Durch ein Versetzen der Rollenzeilen 40 wird die Gefahr des Hängenbleibens von unförmigen Sendungen (=Stückgüter) mit asymmetrischer Schwerpunktlage weiter reduziert. Der Begriff «Doppelrolle» 42 wird benutzt, um auszudrücken, dass zwei Rollen in einem Rahmen pro ursprünglicher Transportrolle für den Transport der Stückgüter vorgesehen sind. Das Zentralmodul 45 gemäß der FIG 4 ist in Zusammenhang mit der FIG 5 auch als Fördereinheit 40 anzusehen. Dies schliesst den Sonderfall ein, dass die Fördereinheit 40 auch aus nur einer Rollenzeile 40 bestehen kann.

FIG 5 zeigt eine Fördereinheit 40 mit einem Nachrüstsatz. Die zugrundeliegende Fördereinheit 40 ist in «Einfachrollentechnologie» ausgeführt, siehe dazu die Rollen 41 (deren Drehachse 48 ist in FIG 5 oben links stellvertretende für alle Rollen 41 angegeben). In den Rollenzeilen 40 ist auf einer Geraden eine Mehrzahl von drehbaren Rollenhaltern 43 angeordnet. Jeder Rollenhalter 43 trägt eine Rolle 41. Diese ursprünglich für den Transport der Stückgüter vorgesehenen Rollen 41 definieren eine ursprüngliche Transportebene 51', siehe dazu vorstehend die Erläuterung zur FIG 3. Jeder Rollenhalter 43 ist zum Zweck der Richtungsvorgabe für auszuschleusende Stückgüter um eine zur Transportebene 51' orthogonale Schwenkachse 52 drehbar. Für die Nachrüstung werden pro Rollenhalter 43 zwei Aufsatzrollen 42 wie folgt aufgebracht: Die Aufsatzrollen 42 sind drehbar um ihre Achsen 47 in einem Rahmen 55 geführt. Dieser Rahmen 55 ist vorzugsweise als Ringrahmen 55 ausgeführt, derart, dass der Ringrahmen 55 als innerer Ringrahmen fungiert, der in einem äusseren Ringrahmen drehbar um die Achse 52 des zugehörigen Rollenhalters 43 geführt ist. Der äussere Ringrahmen (nicht explizit dargestellt in FIG 5) ist je nach Wahl mit der Fördereinheit 40 als Ganzes oder mit der entsprechenden Rollenzeile 40 mechanisch verbunden. Die rotatorische Kopplung der Aufsatzrollen 42 mit der Rolle 41 bzw. Motorrolle 41 kann wie folgt realisiert werden:
i) Die Aufsatzrollen 42 berühren je die Rolle 41 und werden dadurch «mitgenommen», also via Friktion. Wie eingangs erwähnt sind die Rollen 41 meist mit einer Gummioberfläche versehen. Es ist vorteilhaft auch die Aufsatzrollen 42 mit einer solchen Gummioberfläche zu versehen, um einen höheren Reibungskoeffizient zu erzielen.
ii) Um die Aufsatzrollen 42 kann ein (kleines) Band geführt werden, so dass das Band durch die Rolle 41 etwas gespannt wird und dadurch ebenfalls «mitgenommen» wird, also ebenfalls via Friktion (das Band ist in den FIG nicht dargestellt).

Die Bandlösung gemäß ii) hat den Vorteil, dass eine zusätzliche Fläche für die Beförderung der Stückgüter geschaffen wird. Die Ausführung mit dem Band muss sehr präzise sein, so dass die Bandränder keinen Anlass zu einer Blockade von einzelnen Stückgütern geben, dies ist insbesondere wichtig für Sendungen, deren Verpackung lediglich aus einem Plastiksack besteht und im Innern des relativ großen Plastiksackes ein relativ kleines aber schweres Teil sich befindet.

Unabhängig von den vorgenannten Ausführungsformen kann eine eine Mehrzahl von Rahmen 55 in einem Aufsatzgestell 44 enthalten sein, derart dass jeder Rahmen 55 drehbar um die Schwenkachse 52 gelagert ist und das Aufsatzgestell 44 mit der Fördereinheit 40 verbunden ist. Die konstruktive Verbindung von Aufsatzgestell 44 mit der Fördereinheit ist in FIG 5 nicht dargestellt, das ergibt sich aus dem Wissen des Fachmanns. In FIG 5 ist ein Aufsatzgestell 44 gezeigt, das sich über mehrere Rollenzeilen 40 erstreckt. Das Aufsatzgestell 44 kann insbesondere für eine einzige Rollenzeile 40 ausgeführt sein, um eine maximale Flexibilität bei der Nachrüstung von bestehenden Fördereinheiten 40 und auch bei der Wartung solcher Fördereinheiten zu erreichen. Somit ist ein Nachrüstsatz vorzugsweise als ein Aufsatzgestell 44 für eine Rollenzeile 40 ausgebildet.

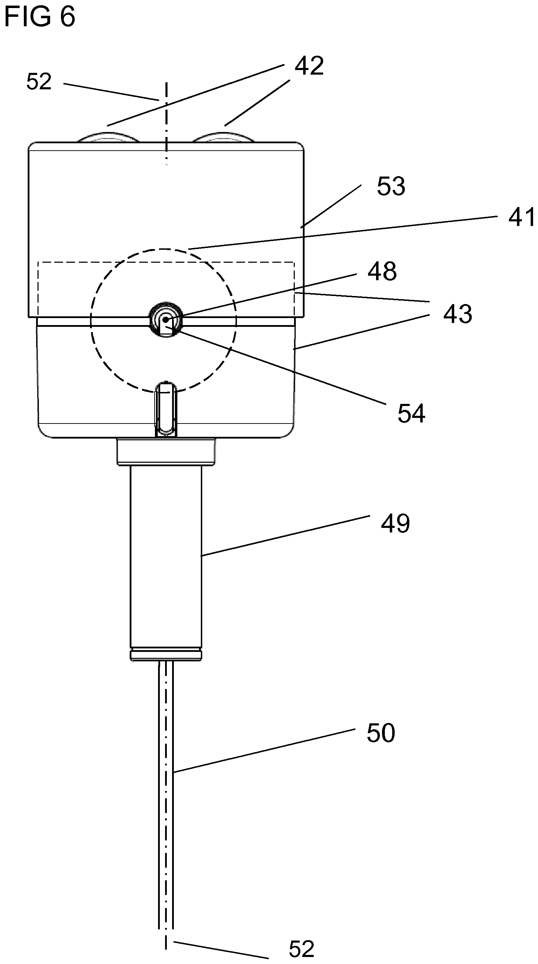

FIG 6 zeigt eine weitere mit der FIG 5 nicht kombinierbare Ausführungsform der vorliegenden Erfindung. Ein bestehender Rollenhalter 43 (bestehend im Sinne von: Vorhanden bei den bisherigen in «Einfachrollentechnologie» ausgeführten Fördereinheiten) ist drehbar geführt über eine Rollenhalterwelle 49. Das Gegenstück nämlich ein Lager bzw eine Büchse als Teil der Fördereinheit ist in FIG 6 nicht dargestellt. Für den Antrieb des Motors der Rolle 41 ist ein Strom- und Datenkabel 50 vorgesehen, das weiter oben ungefähr bei der Drehachse 48 der Rolle 41 durch eine Kabeleinführung 54 geführt wird. Diese Kabeleinführung wird dann benötigt, wenn die Rolle 41 als Motorrolle 41 ausgeführt ist. Das heißt der Motor für den Antrieb der Rolle 41 befindet sich im Innern der Rolle 41. Der Rollenhalter ist um die Schwenkachse 52 drehbar. Antrieb und Sensorelemente dazu sind in der FIG 6 nicht dargestellt. Zur Aufrüstung auf die «Doppelrollentechnologie» ist nun ein Aufsatzrollenhalter 53 - kann auch Rahmen 53 genannt werden - vorgesehen, der die beiden Aufsatzrollen 42 enthält. Diese Aufsatzrollen können wie vorstehend erläutert auch Doppelrollen 42 genannt werden. Der Aufsatzrollenhalter 53 kann auf verschiedene Weise mit dem Rollenhalter 43 verbunden werden:
i) Kraftschluss durch Verschrauben,
ii) Formschluss zwischen den Aufsatzrollenhalter 53 und Rollenhalter 43, beispielsweise durch ein kongruentes Innen-/Aussenprofil der beiden Halter 43 und 53.

Die rotatorische Kopplung der Aufsatzrollen 42 mit der Rolle 41 kann direkt oder auch mit einem um die beiden Aufsatzrollen 42 umlaufenden Band erfolgen.

Die Ausführungsform mit dem Aufsatzrollenhalter 53 hat gegenüber der in FIG 5 dargestellten Ausführungsform der Vorteil, dass so nur tatsächlich defekte oder verschmutzte Aufsatzrollen bei der Wartung ausgewechselt werden müssen. Bei einer flächenmässig zu erwartenden Verschmutzung, zB durch Auslaufen einer chemischen Flüssigkeit aus einem Stückgut ist die Ausführungsform gemäß der FIG 5 vorteilhafter.

### Bezugszeichenliste/Glossar zu FIG 1 und FIG 2 gemäß dem Dokument WO 2017/200019 A1 [1]

- 1: Transportzelle, conveying cell;
- 2: Transportvorrichtung, conveying device
- 3: Transportrolle, conveying roller
- 5: Transportsektion, traveling section
- 6: Drehpunkt, swivel base
- 7: Gehäuse, casing
- 8: turning motor
- 9: traveling motor
- 71: Planar transport apparatus
- A: carrying side
- B, C, D: carrying-out side

### Bezugszeichenliste/Glossar zu FIG 3 gemäß dem Dokument WO 2018/141465 A1 [3]

- 2: Fördereinheit
- 8, 8a, 8b, ...: Transportrolle
- 16: Höhenverstellvorrichtung
- 18a: Antriebsmittel für Transportrolle 8a
- 32: Verbindungsvorrichtung
- 30: Elektronikeinheit
- 36: Abdeckung

### Bezugszeichenliste/Glossar zu FIG 4 bis FIG 6

- 40: Fördereinheit, Rollenzeile
- 41: Motorrolle, Rolle
- 42: Aufsatzrolle, Doppelrolle
- 43: Rollenhalter
- 44: Aufsatzrahmen, Aufsatzgestell
- 45: Zentralmodul
- 46: Ring
- 47: Drehachse einer Doppelrolle
- 48: Drehachse einer Rolle, Motorrolle
- 49: Rollenhalterwelle
- 50: Strom- und Datenkabel
- 51': Transportebene definiert durch die Rollen bzw. Motorrollen; ursprüngliche Transportebene einer nachzurüstenden Fördereinheit
- 51: Transportebene definiert durch die Aufsatzrolle, finale Transportebene
- 52: Drehachse, Schwenkachse eines Rollenhalters
- 53: Aufsatzrollenhalter, Rahmen
- 54: Kabeleinführung für Motorrolle
- 55: Rahmen, Ringrahmen
- d: Zuführrichtung

### Liste der zitierten Dokumente

[1] WO 2017/200019 A1
   CONVEYING DEVICE,
   ITOH DENKI CO. LTD
[2] WO 2018/141459 A1
   FÖRDEREINHEIT MIT EINSTELLBAREN TRANSPORTROLLEN, SIEMENS AKTIENGESELLSCHAFT
[3] WO 2018/141465 A1
   MODULARE FÖRDEREINHEIT,
   SIEMENS AKTIENGESELLSCHAFT

## Patentansprüche

1. Fördereinheit (40) für ein übergeordnetes Fördersystem zum Transport von Stückgütern, wobei
- die Stückgüter in einer Zuführrichtung (d) zu einer ursprünglichen Transportebene (51') der Fördereinheit (40) zugeführt werden;
- die Fördereinheit (40) Rollenhalter (43) enthält, die je eine Rolle (41) aufweisen, deren Drehachse (48) parallel zur ursprünglichen Transportebene (51') ist und jeder Rollenhalter (43) um eine zur ursprünglichen Transportebene (51') orthogonale Schwenkachse (52) durch eine Steuerung drehbar ist,
- die Rollen (41) mit einem Antriebsmittel gekoppelt sind, wobei das Antriebsmittel von der Steuerung betätigbar ist;
**dadurch gekennzeichnet, dass**
zu jedem Rollenhalter (43) zwei in einem Rahmen (53, 55) gehaltene Aufsatzrollen (42) für den Transport der Stückgüter auf einer finalen Transportebene (51), die parallel zur ursprünglichen Transportebene (51') ist, vorgesehen sind, wobei die Drehachsen (47) der Aufsatzrollen (42) parallel zur finalen Transportebene (51) angeordnet sind und die Aufsatzrollen (42) mit der Rolle (41) rotatorisch gekoppelt sind.

2. Fördereinheit (40) nach Anspruch 1,
**dadurch gekennzeichnet, dass**
das Antriebsmittel zu jeder Rolle (41) als Motorrolle (41) ausgebildet ist, so dass das genannte Antriebsmittel in der Rolle (41) enthalten ist.

3. Fördereinheit (40) nach Anspruch 1 oder 2,
**dadurch gekennzeichnet, dass**
die Kopplung der Aufsatzrollen (42) mit den Rollen (41) durch ein um die zwei Aufsatzrollen (42) umlaufendes Band ausgebildet ist, wobei die Stückgüter vom Band auf der finalen Transportebene (51) befördert werden.

4. Fördereinheit (40) nach einem der Ansprüche 1 bis 3,
**dadurch gekennzeichnet, dass**
die Fördereinheit (40) in wenigstens eine Rollenzeile (40) gegliedert ist, dergestalt, dass eine Mehrzahl von Rollenhaltern (43) auf einer Geraden orthogonal zur Zuführrichtung (d) angeordnet ist.

5. Fördereinheit (40) nach einem der Ansprüche 1 bis 4,
**dadurch gekennzeichnet, dass**
der Rahmen (55) als Ringrahmen (55) in einem äusseren Ringrahmen enthalten ist, derart dass der Rahmen (55) drehbar um die Schwenkachse (52) gelagert ist und der äussere Ringrahmen mit der Fördereinheit (40) verbunden ist.

6. Fördereinheit (40) nach einem der Ansprüche 1 bis 4,
**dadurch gekennzeichnet, dass**
der Rahmen (55) als Ringrahmen (55) in einem äusseren Ringrahmen enthalten ist, derart dass der Rahmen (55) drehbar um die Schwenkachse (52) gelagert ist und der Rahmen (55) mit dem entsprechenden Rollenhalter (43) verbunden ist.

7. Fördereinheit (40) nach einem der Ansprüche 1 bis 4,
**dadurch gekennzeichnet, dass**
eine Mehrzahl von Rahmen (55) in einem Aufsatzgestell (44) drehbar enthalten ist, derart dass jeder Rahmen (55) um die Schwenkachse (52) drehbar gelagert ist und das Aufsatzgestell (44) mit der Fördereinheit (40) verbunden ist.

8. Fördereinheit (40) nach einem der Ansprüche 1 bis 3,
**dadurch gekennzeichnet, dass**
pro Rollenhalter (43) ein Aufsatzrollenhalter (53) vorgesehen ist, der die zwei Aufsatzrollen (42) für den Transport der Stückgüter auf einer finalen Transportebene (51) enthält und wobei der Aufsatzrollenhalter (53) mit dem Rollenhalter (43) verbunden ist.

9. Fördereinheit (40) nach Anspruch 8,
**dadurch gekennzeichnet, dass**
die Verbindung zwischen Rollenhalter (43) und Aufsatzrollenhalter (53) kraftschlüssig oder formschlüssig ausgeführt ist.

10. Nachrüstsatz für ein wenigstens eine Fördereinheit (40) aufweisendes rollenbasiertes Fördersystem zum Transport von Stückgütern, wobei
- die Stückgüter in einer Zuführrichtung (d) zu einer ursprünglichen Transportebene (51) der Fördereinheit (40) zuführbar sind;
- die Fördereinheit (40) Rollenhalter (43) enthält, die je eine Rolle (41) aufweisen, deren Drehachse (48) parallel zur ursprünglichen Transportebene (51) ist und jeder Rollenhalter (43) ansteuerbar um eine zur ursprünglichen Transportebene (51) orthogonale Schwenkachse (52) schwenkbar ist,
- die Rollen (41) mit einem Antriebsmittel gekoppelt sind, wobei das Antriebsmittel von einer Steuerung steuerbar ist;
**dadurch gekennzeichnet, dass**
der Nachrüstsatz gebildet wird aus einem Rahmen (53, 55), in dem zwei Aufsatzrollen (42) gehalten sind die für den Transport der Stückgüter in einer zur ursprünglichen Transportebene (51') parallelen finalen Transportebene (51) vorgesehen sind, derart, dass die Drehachsen (47) der Aufsatzrollen (42) parallel zu den Transportebenen (51', 51) sind und der Nachrüstsatz mit der Fördereinheit (40) so verbindbar ist, dass je zwei Aufsatzrollen (42) mit der Rolle (41) des Rollenhalters (43) rotatorisch gekoppelt sind.

11. Nachrüstsatz nach Anspruch 10,
**dadurch gekennzeichnet, dass**
für die Kopplung der Aufsatzrollen (42) mit den Rollen (41) ein um die zwei Aufsatzrollen (42) umlaufendes Band vorgesehen ist, wobei die Stückgüter vom Band befördert werden und das Band durch die Rolle (41) angetrieben wird.

12. Nachrüstsatz nach Anspruch 10 oder 11,
**dadurch gekennzeichnet, dass**
eine Mehrzahl von Rahmen (55) auf einer Geraden orthogonal zur Zuführrichtung (d) in einem weiteren Rahmen angeordnet ist.

13. Nachrüstsatz nach einem der Ansprüche 10 bis 12
**dadurch gekennzeichnet, dass**
der Rahmen (55) als Ringrahmen (55) in einem äusseren Ringrahmen enthalten ist, derart dass der Rahmen (55) um die Schwenkachse drehbar gelagert ist und der äussere Ringrahmen mit der Fördereinheit (40) verbindbar ist.

14. Nachrüstsatz nach einem der Ansprüche 10 bis 13
**dadurch gekennzeichnet, dass**
eine Mehrzahl von Rahmen (55) in einem Aufsatzgestell (44) enthalten ist, derart dass jeder Rahmen (55) drehbar um die Schwenkachse (52) gelagert ist und das Aufsatzgestell (44) mit der Fördereinheit (40) verbindbar ist.

15. Nachrüstsatz nach Anspruch 10 oder 11
**dadurch gekennzeichnet, dass**
pro Rollenhalter (43) ein Aufsatzrollenhalter (53) vorgesehen ist, der die zwei Aufsatzrollen (42) für den Transport der Stückgüter auf einer finalen Transportebene (51) enthält und wobei der Aufsatzrollenhalter (53) mit dem Rollenhalter (43) über einen Kraftschluss oder einen Formschluss verbindbar ist.
